# EUROPÄISCHE PATENTSCHRIFT

(11) **EP 1 082 384 B1**
(45) Veröffentlichungstag und Bekanntmachung des Hinweises auf die Patenterteilung: **08.10.2003**
(21) Anmeldenummer: 99913279.8
(22) Anmeldetag: 19.03.1999
(51) Int. Cl.: C08J 9/22, B29C 44/34, C08L 25/04

(54) **WASSERGESCHÄUMTE POLYSTYROLPARTIKEL**
WATER EXPANDED POLYSTYRENE PARTICLES
PARTICULES DE POLYSTYRENE GONFLEES A L'AIDE D'EAU

(30) Priorität: 24.03.1998 DE 19812854
(43) Veröffentlichungstag der Anmeldung: 14.03.2001
(73) Patentinhaber: BASF AKTIENGESELLSCHAFT, 67056 Ludwigshafen (DE)
(72) Erfinder: GLÜCK, Guiscard, D-55129 Mainz (DE); HAHN, Klaus, D-67281 Kirchheim (DE); GELLERT, Roland, D-67434 Neustadt (DE)
(86) Internationale Anmeldenummer: EP9901840
(87) Internationale Veröffentlichungsnummer: WO99048958

(56) Entgegenhaltungen:
- WO-A-98/01488
- US-A- 4 839 396
- US-A- 5 110 837
- US-A- 5 114 640

## Beschreibung

Die Erfindung betrifft ein Verfahren zur Herstellung von Polystyrol-Schaumstoffpartikel durch Verschäumen von Polystyrolperlen mit Wasser als Treibmittel sowie wassergeschäumte Polystyrol-Schaumstoffpartikel mit niedriger Schüttdichte.

Polystyrol-Schaumstoffe werden üblicherweise mit Hilfe organischer Treibmittel hergestellt, beispielsweise mit flüchtigen Kohlenwasserstoffen, insbesondere Pentan. Aus Umweltschutzgründen muß bei der Herstellung und Verarbeitung von EPS emittiertes Pentan wieder aufgefangen werden. Dies ist aufwendig und kostenintensiv. Es ist daher sinnvoll, längerfristig diese organischen Substanzen durch unbedenkliche Treibmittel zu ersetzen. Ein Weg dazu ist die Verwendung von Wasser als Treibmittel.

In der Dissertation "Water Expandable Polystyrene" (WEPS) von J. J. Crevecoeur an der Universität Eindhoven aus dem Jahr 1997 ist ein Verfahren zur Herstellung von Polystyrol-Schaumstoffpartikeln mit Wasser als Treibmittel beschrieben. Dabei wird zunächst Wasser in einer Styrol-Polystyrol-Mischung mit Hilfe von amphiphilen oberflächenaktiven Substanzen emulgiert, dann wird diese Emulsion in Wasser suspendiert und das Styrol polymerisiert. Die entstandenen Polystyrolperlen enthalten Wassertröpfchen in sehr feiner Verteilung. Beim Verschäumen dieser Polystyrolperlen ergibt sich jedoch ein gravierendes Problem: Wasser diffundiert aufgrund seiner geringen Molmasse wesentlich rascher durch die Zellwände als z.B. Pentan, so daß eine nur verhältnismäßig geringe Expansion erreicht wird. Selbst bei Einsatz optimaler Emulgierhilfsmittel bei der Herstellung der Wasser enthaltenden Polystyrolperlen und bei Anwendung von 130°C heißer Luft zum Schäumen wird nur ein Expansionsgrad von maximal 24 erreicht, was einer Schüttdichte von 25 g/l entspricht.

Aus Gründen der Materialersparnis strebt man jedoch im allgemeinen wesentlich niedrigere Schüttdichten an.

Der Erfindung lag daher die Aufgabe zugrunde, ein Verfahren zum Verschäumen von Wasser als Treibmittel enthaltenden Polystyrolperlen zu entwickeln, das die Herstellung von Polystyrol-Schaumstoffpartikeln mit niedrigerer Schüttdichte ermöglicht.

Diese Aufgabe wird durch das erfindungsgemäße Verfahren gelöst.

Wenn in der vorliegenden Patentanmeldung von "Polystyrol" die Rede ist, dann sollen dabei auch Copolymere des Styrols mit bis zu 20 Gew.-% üblicher Comonomerer, z.B. Alkylstyrole, Acrylnitril oder α-Metylstyrol mitumfaßt sein, sowie Mischungen von Polystyrol mit bis zu 20 Gew.-% anderer Polymerer, wie Kautschuke oder Polyphenylenether.

Das erfindungsgemäße Verfahren geht aus von Polystyrolperlen, die 2 bis 20 Gew.-%, vorzugsweise 5 bis 15 Gew. % und insbesondere 8 bis 13 Gew.-% Wasser als einziges Treibmittel enthalten. Derartige Wasser enthaltende Polystyrolperlen können - wie in der Dissertation von Crevecoeur beschrieben - hergestellt werden durch Polymerisation von Styrol in wässriger Suspension, wobei die suspendierten Styroltropfen Wasser in feiner Verteilung emulgiert enthalten. Die dabei entstehenden Polystyrolperlen weisen gewöhnlich einen mittleren Teilchendurchmesser von 0,2 bis 5, insbesondere von 0,5 bis 2 mm auf. Sie enthalten vorzugsweise 0,1 bis 2 Gew.-% einer organischen Bromverbindung, z.B. Hexabromcyclododecan, als Flammschutzmittel. Die Polystyrolperlen werden gewaschen und von oberflächlich anhaftendem Wasser befreit.

In der ersten erfindungsgemäßen Verfahrensstufe (a) werden die Polystyrolperlen auf Temperaturen oberhalb von 100°C erhitzt, vorzugsweise auf 110 bis 150°C und insbesondere auf 120 bis 140°C. Das Erhitzen kann mit heißen Gasen, vorzugsweise in einem etwa 130°C heißem Luftstrom, z.B. in einem üblichen EPS-Vorschäumer vorgenommen werden. Diese Behandlung dauert zweckmäßigerweise weniger als 2 min. Dabei werden die Polystrolperlen durch Verdampfen und Expandieren der Wassertröpfchen angeschäumt. Ihre Schüttdichte sinkt von ursprünglich etwa 600 g/l auf 40 bis 400 g/l, vorzugsweise auf 50 bis 200 g/l.

In der zweiten Stufe (b) werden die angeschäumten Partikel bei Temperaturen zwischen 20 und 95°C, vorzugsweise zwischen 40 und 80°C getrocknet. Dies geschieht mit trockener Luft, mit Stickstoff oder CO₂. Die Dauer der Behandlung beträgt 1 bis 10 Stunden, vorzugsweise 2 bis 8 Stunden. Bei dieser Behandlung werden die Schaumstoffpartikel vom restlichen Wasser befreit.

In der dritten Stufe (c) werden die getrockneten Schaumstoffpartikel mit Wasserdampf oder einem Gasgemisch, das mindestens 50 Vol-% Wasser enthält, weiter geschäumt. Der Wasserdampf hat dabei eine Temperatur von 100 bis 140°C, vorzugsweise von 100 bis 130°C. Dies kann in üblichen drucklosen Gefäßen oder in Druckvorschäumern geschehen, und dauert normalerweise 10 sec. bis 5 min. Dabei wird das Schüttgewicht der Schaumstoffpartikel weiter reduziert, zum Beispiel um 20 bis 80 %, vorzugsweise um 40 bis 60 %.

Die Stufen (b) und (c) werden dann solange wiederholt bis die angestrebte Schüttdichte erreicht ist, wobei sehr niedrige Schüttdichten erzielt werden können.

Ein weiterer Gegenstand der Erfindung sind daher Polystyrol-Schaumstoffpartikel, die erhalten wurden durch Verschäumung von Wasser als einzigem Treibmittel enthaltenden Polystyrolperlen, die eine Schüttdichte von weniger als 25 g/l, vorzugsweise von weniger als 20 g/l und insbesondere von 8 bis 16 g/l aufweisen.

Die Schaumstoffpartikel können nach üblichen Verfahren zu Schaumstoff-Formköpern, z.B. Blöcken, Platten oder Formteilen verschweißt werden.

### Beispiel

Polystyrolperlen, welche 12 Gew.-% Wasser in feiner Verteilung enthalten, werden 50 sec. lang mit 130°C heißer Luft behandelt, wobei die Perlen um das 10-fache zu einem Schüttgewicht von 60 g/l aufschäumen. Die angeschäumten Partikel werden anschließend in einem Strom von trockener, 70°C heißer Luft 6 h lang behandelt. Dann werden sie in einem Vorschäumer mittels Wasserdampf von 120°C 2 min lang auf eine Schüttdichte von 30 g/l weiter geschäumt. Nach zweimaligem weiterem Trocknen und Schäumen mit Wasserdampf werden Schaumstoffpartikel einer Schüttdichte von 10 g/l erhalten.

## Patentansprüche

1. Verfahren zur Herstellung von Polystyrol-Schaumstoffpartikeln durch Verschäumen von Polystyrolperlen, die Wasser als einziges Treibmittel enthalten, **gekennzeichnet durch** folgende Stufen:
a) Polystyrolperlen, die 5 bis 20 Gew-% Wasser inkorporiert enthalten, werden auf Temperaturen oberhalb von 100°C erhitzt, wobei angeschäumte Partikel entstehen,
b) die angeschäumten Partikel werden bei Temperaturen zwischen 20 und 95°C 1 bis 10 Stunden lang mit trockener Luft, Stickstoff oder CO₂ getrocknet,
c) die getrockneten Schaumstoffpartikel werden mit Wasserdampf oder einem Gasgemisch, das mindestens 50 Vol-% Wasserdampf enthält, bei Temperaturen von 100 bis 140°C weiter geschäumt,
d) die Stufen b) und c) werden solange wiederholt, bis die angestrebte Schüttdichte erreicht ist.

2. Verfahren nach Anspruch 1, **dadurch gekennzeichnet, daß** in Stufe a) bis zu einem Schüttgewicht von 40 bis 400 g/l geschäumt wird, und daß in Stufe c) das Schüttgewicht um 20 bis 80 % weiter reduziert wird.

## Claims

1. A process for the preparation of expanded polystyrene particles by expanding polystyrene beads containing water as the sole expanding agent, **characterized by** the following stages:
a) polystyrene beads, in which from 5 to 20 wt % of water is incorporated, are heated to temperatures above 100°C to produce pre-expanded particles,
b) the pre-expanded particles are dried with dry air, nitrogen or CO₂ at temperatures between 20 and 95°C over a period of from 1 to 10 hours,
c) the dried expanded particles are further expanded with steam or a gas mixture containing at least 50 vol % of steam at temperatures of from 100 to 140°C, and
d) the stages b) and c) are repeated as often as is necessary to achieve the desired bulk density.

2. A process as claimed in claim 1, **characterized in that** the expansion carried out in stage a) is set to give a bulk density of from 40 to 400 g/L and in stage c) the bulk density is further reduced by from 20 to 80%.

## Revendications

1. Procédé de préparation de particules de polystyrène expansées à l'eau, par expansion de perles de polystyrène, contenant de l'eau comme unique agent porogène, **caractérisé par** les étapes suivantes:
a) des perles de polystyrène, auxquelles sont incorporés de 5 à 20% en poids d'eau, sont chauffées à des températures de plus de 100°C, suite à quoi il se forme des particules pré-expansées,
b) les particules pré-expansées sont séchées à des températures de 20 à 95°C, pendant 1 à 10 heures, au moyen d'air, d'azote ou de CO₂ sec,
c) les particules de mousse séchées sont encore expansées au moyen de vapeur d'eau ou d'un mélange gazeux contenant au moins 50% en volume de vapeur d'eau, à des températures de 100 à 140°C,
d) les étapes b) et c) sont répétées jusqu'à ce l'on atteigne la densité apparente visée.

2. Procédé selon la revendication 1, **caractérisé en ce que**, dans l'étape a), on effectue l'expansion jusqu'à une densité apparente de 40 à 400 g/l et, dans l'étape c), on réduit encore la densité apparente de 20 à 80%.
